# EUROPÄISCHE PATENTSCHRIFT

(11) **EP 2 006 660 B1**
(45) Veröffentlichungstag und Bekanntmachung des Hinweises auf die Patenterteilung: **05.08.2015**
(21) Anmeldenummer: 08158468.2
(22) Anmeldetag: 18.06.2008
(51) Int. Cl.: G01N 3/12, F16L 55/00, G05B 23/02

(54) **Verfahren zum Überwachen der Beanspruchung eines Rohrleitungsabschnitts**
Method for monitoring the use of a section of a tube
Procédé de surveillance de la contrainte d'une section de conduite

(30) Priorität: 20.06.2007 DE 102007028891
(43) Veröffentlichungstag der Anmeldung: 24.12.2008
(73) Patentinhaber: STEAG Energy Services GmbH, 45128 Essen (DE)
(72) Erfinder: Gocht, Dietmar, 47259, Duisburg (DE); Kaminski, Tomasz, 46045, Oberhausen (DE)
(74) Vertreter: Zenz Patentanwälte Partnerschaft mbB

(56) Entgegenhaltungen:
- EP-A1- 0 895 197
- EP-A1- 1 543 394
- US-A- 4 945 775
- US-A1- 2003 046 382
- US-A1- 2005 107 963
- US-A1- 2006 217 902
- US-A1- 2006 254 373
- US-B1- 6 556 924

## Beschreibung

Die Erfindung betrifft ein Verfahren zum Überwachen der Beanspruchung eines in eine Rohrleitungsanordnung eingebundenen, von einem Medium durchströmten Rohrleitungsabschnitts.

Rohrleitungen in Anlagen der Chemieindustrie, der Kraftwerkstechnik und anderer Anwendungen werden oftmals von Medien durchströmt, die unter hohem Druck stehen und hohe Temperaturen aufweisen. Die Drücke und die Temperaturen sind so hoch, daß die für die Rohrleitungen verwendeten Werkstoffe an ihre technischen Grenzen, insbesondere hinsichtlich ihrer Festigkeit, stoßen. Diese Beanspruchung mindert die Lebensdauer der Rohrleitungsanordnungen stark. Diese Rohrleitungen nennt man hochbeansprucht. Hochbeanspruchte Rohrleitungen sind hinsichtlich ihrer Beanspruchung zu überwachen und wiederkehrenden Prüfungen zu unterziehen, da ein unkontrolliertes Versagen Personen gefährden kann. Mit kontinuierlichen Diagnose- und Überwachungsverfahren kann die Lebensdauerreserve der Rohrleitungsanordnungen überwacht werden.

Um eine Aussage darüber zu gewinnen, wann eine Rohrleitung oder ein Rohrleitungsabschnitt gewartet oder erneuert werden muß, werden aus gemessenen Betriebsparametern (wie beispielsweise dem Druck oder der Temperatur der Medien in der Rohrleitung) und im Rechner hinterlegten Modellen der Rohrleitung zunächst Aussagen über eine aktuelle Beanspruchung der Rohrleitung gewonnen, d. h. Werte, die jeweils eine mechanische Beanspruchung eines bestimmten Rohrleitungsabschnitts kennzeichnen. Aus dem zeitlichen Verlauf, d. h. der zeitlichen Folge ermittelter Beanspruchungswerte werden dann Aussagen über den Erschöpfungszuwachs bzw. die Restlebensdauer des Rohrleitungsabschnitts gewonnen. Von der Art der hinterlegten Modelle und den gemessenen Betriebsparametern hängt es ab, mit welcher Genauigkeit Aussagen über die tatsächliche Beanspruchung eines Rohrleitungsabschnitts gewonnen werden können.

Bei einem bekannten Verfahren werden vor Inbetriebnahme anhand eines Rohrleitungsmodells, welches die Leitungsverläufe, die Rohrgeometrie, die verwendeten Werkstoffe, das Eigengewicht, die Aufhängungen und Unterstützungen sowie die Halterungselemente beschreibt, verschiedene Lastfälle (d. h. Betriebszustände) modelliert und die sich ergebenden Belastungen (Spannungen und Dehnungen in den Rohrleitungsabschnitten) berechnet. Es wird beispielsweise berechnet, wie sich bei bestimmten Temperaturen und Drücken bestimmte Spannungen und Dehnungen und insbesondere auch Verschiebungen bestimmter Punkte der Rohrleitung ergeben. Mit Hilfe der berechneten Modelle kann ein Zusammenhang zwischen einer bestimmten Verschiebung an einem Punkt eines Rohrleitungsabschnitts und einer bestimmten Betriebstemperatur und einem Druck des durchströmenden Mediums in einem bestimmten Lastfall hergestellt werden. Dabei werden vor Inbetriebnahme eine Reihe von Lastfällen berechnet, die erwarteten Lastfällen im realen Betrieb entsprechen. Die Ergebnisse dieser Berechnungen ausgewählter Lastfälle werden zu Vergleichszwecken in einem Überwachungsrechner hinterlegt.

Im nachfolgenden Betrieb der Rohrleitungsanordnung werden die Belastungsgrößen, wie die Rohrleitungstemperatur und der Druck in der Leitung, sowie Verschiebungen von Rohrleitungsabschnitten an ausgewählten Punkten gemessen. Die unter den gemessenen Drücken und Temperaturen jeweils gemessenen Verschiebungen werden dann mit berechneten Verschiebungen verglichen, die sich bei dem hinterlegten Modell aus den zu Vergleichszwecken hinterlegten Berechnungsergebnissen für ausgewählte Lastfälle unter Berücksichtigung der gemessenen Temperatur und des gemessenen Drucks ergeben sollten. Bei der Berechnung der Soll-Verschiebungen aus den gemessenen Temperaturen und Drücken wird unter der Annahme einer Linearität der Zusammenhänge auf Ähnlichkeitsbeziehungen zurückgegriffen. Sofern sich bei dem Vergleich ergibt, daß die gemessene Verschiebung (Ist-Verschiebung) der berechneten Verschiebung (Soll-Verschiebung) entspricht oder die Differenz zwischen den beiden Verschiebungen unter einem vorgegebenen Schwellwert bleibt, so wird von einem planmäßigen Betrieb ausgegangen, d. h., es wird davon ausgegangen, daß einer der vorab berechneten Modell-Lastfälle vorliegt. Wenn jedoch die gemessene Verschiebung stark von der berechneten Verschiebung abweicht, beispielsweise deutlich geringer ist oder diese erheblich überschreitet, so wird von einem außerplanmäßigen Betriebszustand ausgegangen. Das Vorliegen des Betriebszustands wird dokumentiert. Da allerdings keiner der modellierten Lastfälle vorliegt, können aus den gemessenen Größen nur näherungsweise Abschätzungen der auf die Rohrleitungen einwirkenden Momente und Kräfte bzw. der Spannungen und Dehnungen im Material der Rohrleitung berechnet werden. Diese Näherungswerte werden dann zusammen mit der Zeitdauer, in der diese Zustände jeweils vorlagen, verwendet, um einen Erschöpfungszuwachs bzw. eine Minderung der Restlebensdauer zu berechnen. In Abhängigkeit von diesen berechneten Werten wird dann entschieden, wann eine Wartung oder ein Austausch eines Rohrleitungsabschnitts vorgenommen werden soll.

Nachteilig bei dieser bekannten Vorgehensweise ist es, daß für außerplanmäßige Zustände, für die kein Lastfall-Modell hinterlegt ist, nur relativ ungenaue Aussagen über die tatsächlichen Belastungen und somit den Erschöpfungszuwachs bzw. die Restlebensdauer gewonnen werden können. Um diese Gefahr zu vermindern, müßten eine größere Anzahl von Lastfällen vorab berechnet werden oder bei Feststellung eines außerplanmäßigen Zustands jeweils Neuberechnungen der Modelldaten für weitere Lastfälle vorgenommen und die Ergebnisse nachträglich in den Überwachungsrechner eingebracht werden.

Aufgabe der Erfindung ist es daher, die Genauigkeit der Berechnung der Beanspruchung auch für außerplanmäßige Lastfälle zu verbessern.

Diese Aufgabe wird erfindungsgemäß durch ein Verfahren zum Überwachen der Beanspruchung eines in eine Rohrleitungsanordnung eingebundenen, von einem Medium durchströmten Rohrleitungsabschnitts mit den Merkmalen des Anspruchs 1 gelöst. Der Begriff der Rohrleitungsanordnung soll hier nicht nur die Rohrleitungen selbst sondern auch die Montage- und Befestigungsbauteile einschließen. Das Medium kann flüssig, gasförmig oder mehrphasig sein.

Bei dem erfindungsgemäßen Verfahren zum Überwachen der Beanspruchung eines in eine Rohrleitungsanordnung eingebundenen, von einem Medium durchströmten Rohrleitungsabschnitts werden zunächst Daten, die zumindest Geometrie, Lagerung und Material des Rohrleitungsabschnitts der Rohrleitungsanordnung beschreiben, einer Datenverarbeitungseinrichtung eingegeben und dort gespeichert. Dies geschieht beispielsweise vor Inbetriebnahme der Rohrleitungsanordnung. Die "Geometrie" umfaßt hier sowohl den Verlauf der Rohrleitungen als auch die Geometrie der Rohrleitungswandungen. Die "Lagerung" bezieht sich auf die Lagerung im Sinne der technischen Mechanik und umfaßt Festlager, Loslager und Einspannungen. Der Begriff "Material des Rohrleitungsabschnitts" soll nicht ausschließen, daß auch mehrere Materialien, z. B. verschiedene Schichten der Rohrleitung, vorhanden sein können.

Nach dem Eingeben und Speichern der Daten werden dann laufend mit Hilfe von Sensoren einerseits wenigstens eine Temperatur und ein Druck des Mediums in dem Rohrleitungsabschnitt erfaßt und andererseits wenigstens eine Verschiebung oder Verdrehung eines Rohrleitungsabschnitts gemessen. Der Begriff des Erfassens soll hier sowohl das Messen einer veränderlichen Größe als auch das bloße Einlesen eines Werts einer konstanten, bekannten Größe umfassen. Es kann somit der Fall eintreten, daß laufend mit Hilfe eines Temperatursensors eine Temperatur gemessen wird, der Druck aber lediglich als bekannter Wert von der Datenverarbeitungseinrichtung erfaßt, d. h. eingelesen wird. Außerdem werden den Temperatur-, Druck- und Verschiebungs- bzw. Verdrehungswerten entsprechende Signale der Datenverarbeitungseinrichtung eingegeben und gespeichert.

Dann werden von der Datenverarbeitungseinrichtung zyklisch unter Verwendung eines Rohrleitungsstatik-Programmoduls aus den die Geometrie, die Lagerung und das Material des Rohrleitungsabschnitts beschreibenden Daten und aus den Temperatur-, Druck- und Verschiebungswerten Schnittgrößen an dem Ort des Wandungsabschnitts des Rohrleitungsabschnitts berechnet. Die wird zunächst aus den die Geometrie, die Lagerung und das Material des Rohrleitungsabschnitts beschreibenden Daten und aus den Temperatur- und Druckwerten unter Verwendung des Rohrleitungsstatik-Programmoduls wenigstens eine theoretische Verschiebung oder Verdrehung des Wandungsabschnitts berechnet. Dann wird die wenigstens eine theoretische Verschiebung oder Verdrehung mit der entsprechenden gemessenen Verschiebung bzw. Verdrehung des Wandungsabschnitts verglichen. Bei einer Überschreitung einer vorgegebenen Differenz zwischen der theoretischen und der gemessenen Verschiebung bzw. Verdrehung des Wandungsabschnitts werden erneut unter Verwendung des Rohrleitungsstatik-Programmoduls aus den die Geometrie, die Lagerung und das Material des Rohrleitungsabschnitts beschreibenden Daten und aus den Temperatur- und Druckwerten sowie aus der gemessenen Verschiebung bzw. Verdrehung als Randbedingung die Schnittgrößen berechnet. Die an dem Ort des Wandungsabschnitts berechneten Schnittgrößen können für jede von drei orthogonalen Raumkoordinaten (beispielsweise kartesischen Koordinaten) jeweils eine Verschiebung und eine Verdrehung des Wandungsäbschnitts und eine Kraft und ein Moment an dem Ort des Wandungsabschnitts umfassen. Dadurch, daß die gemessene Verschiebung bzw. Verdrehung als Randbedingung in die Berechnung einfließt, wird erreicht, daß sich die berechneten Werte stets an den tatsächlich vorliegenden Belastungsfall anpassen.

Dann werden von der Datenverarbeitungseinrichtung aus den die Geometrie, die Lagerung und das Material des Rohrleitungsabschnitts beschreibenden Daten, den Temperatur- und Druckwerten und den Schnittgrößen Werte berechnet und gespeichert, die mechanische Spannungen und/oder Dehnungen in der Wandung des Wandungsabschnitts kennzeichnen. Schließlich werden von der Datenverarbeitungseinrichtung zyklisch aus den die Spannungen und/oder Dehnungen kennzeichnenden Werten und der jeweiligen Zeitdauer, in der diese Spannungen bzw. Dehnungen vorlagen, Beanspruchungswerte, die die aktuelle Beanspruchung des Rohrleitungsabschhitts anzeigen, bestimmt und gespeichert.

Die erfindungsgemäße Vorgehensweise hat zunächst den Vorteil, daß vor Inbetriebnahme lediglich die die Rohrleitungsanordnung beschreibenden Daten erfaßt werden müssen. Modellberechnungen von Lastfällen sind nicht mehr erforderlich. Selbstverständlich werden in der Praxis nach wie vor Auslegungsberechnungen nach geltenden Normen und wie im Stand der Technik üblich durchgeführt. Allerdings brauchen die Ergebnisse der Auslegungsberechnungen nur noch insoweit in das Überwachungsverfahren einzufließen, wie sie Geometrie, Material und die Lagerung beschreiben. Die für die Bestimmung der Beanspruchung benötigten Schnittgrößen und die daraus abgeleiteten Werte für mechanische Spannungen und/oder Dehnungen werden zyklisch im laufenden Betrieb auf der Grundlage der die Geometrie, die Lagerung und das Material des Rohrleitungsabschnitts beschreibenden Daten und der gemessenen Temperatur-, Druck- und Verschiebungswerte bestimmt. Da hier auch die tatsächlich gemessenen Verschiebungswerte in die Berechnungen einfließen, können die richtigen Schnittgrößen sowie Spannungen und Dehnungen auch bei ungewöhnlichen bzw. nicht vorhersehbaren Betriebszuständen und Lastfällen berechnet werden. Dies erhöht die Genauigkeit der Aussage über die aktuelle Beanspruchung und gestattet eine kontinuierliche Verfolgung der Beanspruchung der Rohrleitung Die genaueren Aussagen über die tatsächliche Beanspruchung des Rohrleitungssystems ermöglichen eine gezieltere Planung der erforderlichen Wartungsmaßnahmen.

Der Schritt der zyklischen Berechnung der Schnittgrößen und der mechanische Spannungen und/oder Dehnungen anzeigenden Werte einerseits und der Schritt der zyklischen Bestimmung von Beanspruchungswerten andererseits brauchen nicht in demselben zeitlichen Zyklus ausgeführt zu werden. Die Zykluszeiten können verschieden sein. Vorzugsweise werden die zyklisch ausgeführten Schritte in äquidistanten Abständen ausgeführt. Die Schritte können aber auch in unregelmäßigen oder sich ändernden Abständen wiederholt werden.

Bei einer Weiterbildung des erfindungsgemäßen Verfahrens wird von der Datenverarbeitungseinrichtung aus der zeitlichen Folge einer Vielzahl zyklisch aufeinanderfolgend bestimmter Beanspruchungswerte ein Erschöpfungszuwachs und/oder eine Restlebensdauer der Rohrleitungsanordnung ermittelt und ausgegeben. Hierbei wird beispielsweise die Zeitdauer, in der eine bestimmte Beanspruchung vorlag, ins Verhältnis gesetzt zu einer maximalen Lebensdauer bei dieser Beanspruchung. Dann werden die so gewonnenen Verhältnisse aufsummiert.

Bei einer weiteren Ausführungsform des erfindungsgemäßen Verfahrens werden mit Hilfe der Sensoren ferner an Wandungsabschnitten angreifende Kräfte gemessen und entsprechende Signale der Datenverarbeitungseinrichtung eingegeben und dort gespeichert. Die Schnittgrößen und die die Spannungen und/oder Dehnungen kennzeichnenden Werte werden dann auch unter Verwendung der den Kräften entsprechenden Werte berechnet. Beispielsweise werden die gemessenen Kräfte als Randbedingungen den Berechnungen zugrunde gelegt.

Bei einer bevorzugten Ausführungsform des erfindungsgemäßen Verfahrens werden die Schritte des Berechnens der Schnittgrößen und der die mechanischen Spannungen und/oder Dehnungen kennzeichnenden Werte zyklisch jeweils im Abstand von einer Sekunde bis 10 Stunden, vorzugsweise im Abstand von 1 bis 20 min, ausgeführt. Bei einer besonders bevorzugten Ausführungsform wird die Berechnung alle 10 bis 15 min ausgeführt. Die gewählte Zykluszeit ergibt sich aus einer Abwägung zwischen einem hohen Berechnungsaufwand und einer höheren Genauigkeit bei einer geringeren Zykluszeit und einem geringeren Berechnungsaufwand bei geringerer Genauigkeit bei einer längeren Zykluszeit.

Bei einer bevorzugten Ausführungsform des erfindungsgemäßen Verfahrens werden die die Geometrie, die Lagerung und das Material des Rohrleitungsabschnitts beschreibenden Daten als Konfigurationsdaten vor der Inbetriebnahme, insbesondere vor den ausgeführten Messungen, dem Rohrleitungsstatik-Programmodul zur Verfügung gestellt.

Die Temperatur-, Druck- und Verschiebungswerte (und ggf. auch die Kraftwerte) werden dem Rohrleitungsstatik-Programmodul vorzugsweise als Import-Datei eingegeben. Die Schnittgrößen werden vorzugsweise von dem Rohrleitungsstatik-Programmodul als Export-Datei ausgegeben. Vorzugsweise werden die Daten der Import-Datei und auch die Daten der Export-Datei langfristig als Zeitreihen abgespeichert. Auch die berechneten Schnittgrößen, die die Spannungen und/oder Dehnungen kennzeichnenden Werte, die Beanspruchungswerte sowie die Erschöpfungszuwachs-Werte und die Restlebensdauer-Werte können langfristig als Zeitreihen abgespeichert werden.

Ferner werden bei einer bevorzugten Ausführungsform des erfindungsgemäßen Verfahrens die gemessenen Temperaturen, Drücke und Verschiebungen und die berechneten Schnittgrößen jeweils in Klassen eingeteilt. Dann wird aus den Klassen eine mehrdimensionale Matrix gebildet, wobei jede gemessene oder berechnete Größe einer Dimension entspricht, wobei jedes einzelne Matrixfeld einer bestimmten Temperaturklasse, einer bestimmten Druckklasse, einer bestimmten Verschiebungsklasse und bestimmten Schnittgrößenklassen entspricht. Dann werden die Zeiten, in denen die Temperaturen, Drücke, Verschiebungen und Schnittgrößen in jeweils einer bestimmten Klasse vorlagen, in dem zugehörigen Matrixfeld akkumuliert.

Vorteilhafte und/oder bevorzugte Weiterbildungen der Erfindung sind in den Unteransprüchen gekennzeichnet. Im folgenden wird die Erfindung anhand bevorzugter Ausführungsformen sowie anhand der Zeichnungen näher erläutert. In den Zeichnungen zeigen:
Fig. 1A und Fig. 1B eine schematische Darstellungen eines Rohrleitungsabschnitts, bei dem mit Hilfe eines Sensors eine Verschiebung an einem Ende des Rohrleitungsabschnitts gemessen wird; und
Fig. 2 eine schematische Darstellung von Programmodulen und einer Schnittstelle zwischen einem Hauptprogrammmodul zur Überwachung und einem Rohrleitungsstatik-Programmmodul.

Die im Betrieb einer Rohrleitungsanordnung auftretenden Beanspruchungen der einzelnen Rohrleitungsabschnitte werde mit Hilfe eines Rohrleitungsüberwachungsprogrammsystems (auch Rohrleitungsmonitoring-Programm genannt) ständig überwacht. Ziel einer derartigen Überwachung ist es u. a., die Lebensdauerreserven der einzelnen Bestandteile des Rohrleitungssystems besser auszunutzen, indem eine Wartung bzw. Erneuerung von Bestandteilen der Rohrleitungsanordnung erst dann eingeplant wird, wenn - aufgrund der tatsächlichen Beanspruchungsvorgeschichte - ein Erschöpfungszustand erreicht ist, bei dem ein Ausfall wahrscheinlich wird, bzw. eine ausreichend geringe Restlebensdauer vorhergesagt wird. Die tatsächlich von dem Rohrleitungssystem erfahrene Beanspruchung und somit die Restlebensdauer bzw. Erschöpfung werden aufgrund eines hinterlegten Modells der Rohrleitungsanordnung und aufgrund gemessener Betriebsparameter vorhergesagt. Die Genauigkeit der Vorhersage hängt von der Güte des hinterlegten Modells, von der Anzahl und Genauigkeit der gemessenen Betriebsparameter sowie von der Güte der Berechnungen der tatsächlichen Beanspruchungen ab. Bei sämtlichen drei Einflussfaktoren sind selbstverständlich auch wirtschaftliche Aspekte zu beachten. Beispielsweise muss das hinterlegte Modell für die Rohrleitungsanordnung so genau das tatsächliche Rohrleitungssystem abbilden, dass alle für die Beanspruchung relevanten konstruktiven Merkmale erfasst werden. Sollten diese (beispielsweise zum Teil) nicht vorliegen, so werden für bestimmte Rohrleitungsabschnitte diejenigen Rohrleitungsdaten (Rohrabmessung und Material) hinterlegt, die den Soll-Angaben des Rohrherstellers entsprechen, und nicht die tatsächlichen Abmessungen und Materialzusammensetzungen, die innerhalb eines vorgegebenen Toleranzbereichs von den Soll-Daten abweichen können. Auch werden beispielsweise nicht sämtliche Drücke und Temperaturen in geringen Abständen entlang des gesamten Rohrleitungssystems gemessen; vielmehr gibt es ausgewählte Messpunkte, so dass in dazwischen liegenden Abschnitten die tatsächlichen Drücke und Temperaturen innerhalb vorgegebener Toleranzen von den gemessenen abweichen können. Auch Verschiebungen werden an ausgewählten Stellen gemessen, das heißt, es wird nicht die die vollständige Topologie des Rohrleitungssystems mit sämtlichen Abmessungen (Verschiebungen, Ausdehnungen, Verdrehungen und Verbiegungen der Rohrleitungen) messtechnisch erfasst.

Bei einer Rohrleitungsüberwachung (Rohrleitungsmonitoring) wird zunächst einem Rohrleitungsüberwachungsprogramm ein Modell der zu überwachenden Rohrleitungsanordnung zur Verfügung gestellt. Die Daten des Modells sind in Speichern hinterlegt, auf die das Rohrleitungsüberwachungsprogramm zugreifen kann. Das hinterlegte Modell umfasst nicht nur die Geometrie, Lagerung und die Materialeigenschaften der Rohrleitungsanordnung; es sind insbesondere auch Orte spezifiziert, an denen von Sensoren Betriebsparameter, wie Drücke und Temperaturen, Verschiebungen, Verdrehungen oder Kräfte gemessen werden.

In Betrieb werden dann von den einzelnen Sensoren (Druck-, Temperatur- und Verschiebungssensoren beispielsweise) ausgegebene Signale - sofern erforderlich - in digitale Signale (Messwerte) umgewandelt und einem Online-Messdaten-Erfassungsmodul des Rohrleitungsüberwachungsprogrammsystems eingegeben. Das Online-Messdaten-Erfassungsmodul sorgt für eine geeignete Bereitstellung und Speicherung der Messdaten. Das Rohrleitungsüberwachungsprogrammsystem enthält ferner Programmmodule, die einem Bediener auf einem Bildschirm die Rohrleitungsanordnung und/oder Ausschnitte der Anordnung sowie die gemessenen Temperaturen, Drücke oder Verschiebungen/Verdrehungen anzeigen können. Hierbei sind beliebige Arten kombinierter Bildschirm-Darstellungsweisen denkbar. Beispielsweise können die Werte, die ein Maß für die Beanspruchung sind, als Farben des jeweiligen Rohrleitungsabschnitts dargestellt werden.

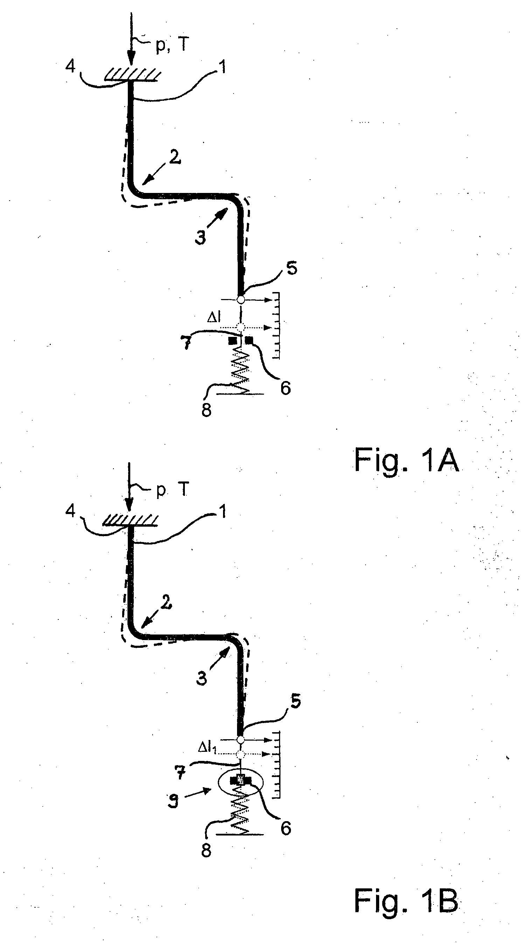

Das Rohrleitungsüberwachungsprogrammsystem umfasst ferner Programmmodule, die aus den hinterlegten Rohrleitungsmodelldaten und den Messwerten an ausgewählten Punkten der Rohrleitung Schnittgrößen, das heißt Verschiebungen, Verdrehungen, Kräfte und Momente in allen drei Raumrichtungen, berechnen können. Die an bestimmten Rohrleitungspunkten berechneten Schnittgrößen können dann beispielsweise mit gemessenen Werten verglichen werden; beispielsweise kann eine berechnete Verschiebung mit einer gemessenen Verschiebung verglichen werden. Sofern die hinterlegten Modelle für bestimmte Lastfälle der Rohrleitungsanordnung den tatsächlich auftretenden Lastfällen entsprechen, stimmen die aufgrund der Modelldaten berechneten Verschiebungen, Verdrehungen, Kräfte und Momente an ausgewählten Punkten der Rohrleitungsanordnung mit den dort gegebenenfalls gemessenen Werten grundsätzlich überein. Eine NichtÜbereinstimmung ergibt sich allerdings dann, wenn der tatsächlich eingetretene Lastfall nicht im Modell hinterlegt ist. Dies wird unten anhand eines in den Figuren 1A und 1B gezeigten Beispiels näher erläutert.

Das Rohrleitungsüberwachungsprogrammsystem enthält ferner Programme oder Module, die aus den gemessenen Werten und den berechneten Schnittgrößen Spannungen und/oder Dehnungen in den Rohrleitungen berechnen. Aus den für bestimmte zuvor definierte Rohrleitungspunkte berechneten Spannungen bzw. Dehnungen können dann Aussagen über die Beanspruchung des Rohrleitungsabschnitts abgeleitet werden. Beispielsweise werden aus den gemessenen Betriebsparametern und den berechneten Spannungen und Dehnungen in vorgegebenen Abständen, beispielsweise stündlich, die Beanspruchung eines Rohrleitungsabschnitts kennzeichnende Werte berechnet und aus der akkumulierten Vorgeschichte dieser Beanspruchungswerte die Gesamterschöpfung bzw. die Restlebensdauer dieses Rohrleitungsabschnitts. Das oben genannte Modul, welches auf einen Bildschirm eine Anzeige liefern kann, kann beispielsweise zusätzlich dazu verwendet werden, die aktuelle Beanspruchung oder die akkumulierte Gesamterschöpfung bzw. Restlebensdauer grafisch darzustellen.

Nachfolgend sei anhand der Figuren 1A und 1B erläutert, wie die für die Ermittlung der Beanspruchung zu berechnenden Spannungen und/oder Dehnungen eines Rohrleitungsabschnitts erfindungsgemäß bestimmt werden, wenn ein planmäßiger (Fig. 1A) oder ein unplanmäßiger (Fig. 1B) Betriebszustand auftritt.

Figur 1A zeigt ein einfaches Modell eines Rohrleitungsabschnitts 1, der zwei Krümmungen 2 und 3 aufweist. An einem Ende ist eine Einspannung 4 vorgesehen und an dem anderen Ende 5 ist eine federnde Aufhängung der Rohrleitung vorgesehen, die ein Gleitlager 6 umfasst, durch welches eine mit dem Rohrleitungsabschnitt 1 verbundene Halterung 7 hindurchgeführt ist. Durch den Rohrleitungsabschnitt 1 wird nun ein Medium bei einem Druck p und einer Temperatur T hindurchgeführt. Durch die erhöhte Temperatur T dehnt sich der Rohrleitungsabschnitt 1 aus, und es ergibt sich beispielsweise der durch die gestrichelte Linie überhöht dargestellte Rohrleitungsverlauf. Gleichzeitig verschiebt sich das Ende 5 des Rohrleitungsabschnitts um eine Distanz Δl, welche vom Druck p und von der Temperatur T abhängig ist. Die durch die Feder 8 symbolisierte Aufhängung wird verformt und übt eine Kraft auf das Ende 5 des Rohrleitungsabschnitts 1 aus. Bei dem in Figur 1A dargestellten Fall wird angenommen, dass eine geringe Reibung der Halterung 7 in dem Gleitlager 6 vorliegt. Der Druck p sowie die Temperatur T und die Verschiebung Δl werden mit Hilfe von Sensoren gemessen. Aus dem hinterlegten Modell des Rohrleitungsabschnitts 1, dem gemessenen Druck p und der gemessenen Temperatur T lässt sich ein Verlauf der thermisch ausgedehnten Rohrleitung und somit unter anderem eine Verschiebung Δl berechnen. Die berechnete Verschiebung stimmt dann, wenn das hinterlegte Modell der realen Rohrleitungsanordnung entspricht, mit der gemessenen Verschiebung Δl überein. Wenn das hinterlegte Modell mit den tatsächlichen Verhältnissen übereinstimmt, lässt sich der Zusammenhang zwischen der Verschiebung und dem Druck und der Temperatur aus Ähnlichkeitsbeziehungen ableiten. Zugleich ist es möglich, mit Hilfe von Ähnlichkeitsbeziehungen und aus Spannungen und Dehnungen, welche im Planungsstadium für bestimmte Lastfälle ermittelt worden sind, die bei einer bestimmten Temperatur T und einem bestimmten Druck p vorliegenden Spannungen oder Dehnungen in dem Rohrleitungsabschnitt 1 zu bestimmen. Auch können die Spannungen und Dehnungen über Ähnlichkeitsbeziehungen aus den gemessenen Verschiebungen Δl berechnet werden. Dies gilt - wie gesagt - nur für den planmäßigen Betrieb, das heißt dann, wenn die gemessene Verschiebung Δl zumindest näherungsweise der für einen bestimmten Druck und eine bestimmte Temperatur berechneten Verschiebung entspricht.

Wenn jedoch, wie in Figur 1B skizziert, der (vorab nicht geplante) Fall eintritt, dass das Gleitlager 6 klemmt, so dass die Verschiebung des Rohrendes 5 behindert wird und sich bei gleichem Druck p und gleicher Temperatur T nur eine geringere Verschiebung Δl₁ ergibt, so versagen die im Modell hinterlegten Ähnlichkeitsbeziehungen. In diesem Fall lassen sich die Spannungen und Dehnungen in dem Rohrleitungsabschnitt 1 weder exakt aus dem gemessenen Druck p und der gemessenen Temperatur T noch aus der gemessenen Verschiebung Δl₁ bestimmen. Da sich die Spannungen und/oder Dehnungen nicht mehr aus den Ähnlichkeitsbeziehungen exakt bestimmen lassen, lassen sich auch keine exakten Aussagen zur Beanspruchung und zum Erschöpfungsgrad ableiten. Diese Aussagen wären dann in aufwendigen Offline-Nachrechnungen zu bestimmen.

Bei der erfindungsgemäßen Vorgehensweise werden jedoch die funktionalen Zusammenhänge zwischen den gemessenen Betriebsparametern Druck p und Temperatur T und der gemessenen Verschiebung Δl und den Spannungen oder Dehnungen nicht mehr aus Ähnlichkeitsbeziehungen abgeleitet; vielmehr wird ein Rohrleitungsstatik-Programmmodul aufgerufen, welches zunächst aufgrund des hinterlegten Rohrmodells (Geometrie, Material, Lagerung) und des gemessenen Drucks p sowie der gemessenen Temperatur T eine theoretische Verschiebung Δl berechnet. Ergibt der Vergleich - wie im Fall der Figur 1B -, dass die theoretische Verschiebung Δl um mehr als ein vorgegebenes Maß von der gemessenen Verschiebung Δl₁ abweicht, so wird anschließend das Rohrleitungsstatik-Programmmodul erneut aufgerufen, wobei neben dem Druck p und der Temperatur T die gemessene Verschiebung Δl₁ als Randbedingung eingegeben wird. Das Rohrleitungsstatik-Programmmodul berechnet aus den gemessenen Größen die Schnittgrößen an vorgegebenen Stellen des Rohrleitungsabschnitts 1. Die gemessenen Schnittgrößen werden dann an ein weiteres Programmmodul übergeben, welches daraus wiederum die Spannungen oder Dehnungen im Rohrleitungsabschnitt berechnet.

Durch die Einbindung des Rohrleitungsstatik-Programmmoduls in die laufende Rohrleitungsüberwachung (Online-Einbindung) wird nicht nur die Genauigkeit der Berechnungen der Spannungen und/oder Dehnungen in Betriebsfällen, die von den vorhergesehenen Betriebsfällen abweichen, erhöht. Die Einbindung des Rohrleitungsstatik-Programmmoduls gestattet stets eine Bestimmung der vollständigen verformten geometrischen Struktur des Rohrleitungsabschnitts. Diese kann zusätzlich für den Bediener dargestellt werden, wobei Verformungen beispielsweise geometrisch überhöht dargestellt werden können und wobei kritische Spannungen durch farbliche Hinterlegung der Rohrdarstellungen gekennzeichnet werden können.

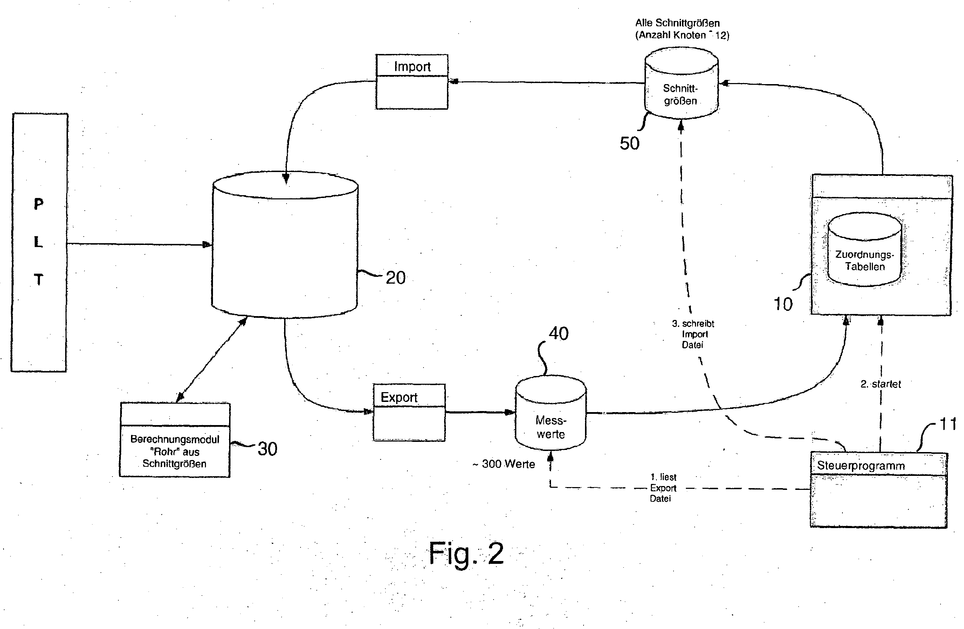

Figur 2 zeigt eine schematische Darstellung der Einbindung des Rohrleitungsstatik-Programmmoduls 10 in das Rohrleitungsüberwachungs-Programmsystem. Das RohrleitungsüberwachungsProgrammsystem enthält das Lebensdauerüberwachungsprogramm 20. Dieses erhält die den Messgrößen entsprechenden Daten und berechnet aus den hinterlegten Modellen, den Daten, eingegebenen Schnittgrößen (Dehnungen, Verdrehungen, Kräften und Momenten) Spannungen und/oder Dehnungen der Rohrleitungsabschnitte mit Hilfe des Berechnungsmoduls 30. Das Lebensdauerüberwachungsprogramm 20 ist über eine Datenschnittstelle mit dem Rohrleitungsstatik-Programmmodul 10 gekoppelt. Diese Schnittstelle umfasst das Exportieren der Messwertdateien 40. Die Messwertdateien 40 werden von dem Rohrleitungsstatik-Programmmodul 10 importiert. Das Rohrleitungsstatik-Programmmodul 10 berechnet daraus Schnittgrößen, welche wiederum über Schnittgrößen-Dateien 50 exportiert und dann von dem Lebensdauerüberwachungsprogramm 20 importiert werden. Das Rohrleitungsstatik-Programmmodul steht unter der Kontrolle eines Steuerprogramms 11. Das Steuerprogramm 11 weist folgende Schritte an: Zunächst sorgt es für einen Import der Messwerte aus der Messwertedatei 40. Die Messwertdaten werden in einer ASCII-Datei bereitgestellt. In der Datei werden die Drücke und die Temperaturen an den vorgegebenen Messpunkten sowie die gemessenen Verschiebungen an vorgegebenen Knoten angegeben. Die Daten enthalten somit jeweils eine Zuordnung der Messwerte zu den entsprechend definierten Punkten der Rohrleitungsanordnung. Zusätzlich ist ein Zeitstempel enthalten. Anschließend sorgt das Steuerprogramm 11 für eine Aktualisierung der Eingabedateien mit Hilfe der importierten Daten, wobei die Eingabedateien für den eigentlichen Berechnungskern des Rohrleitungsstatik-Programmmoduls 10 vorgesehen sind. In einem ersten Berechnungslastfall werden nur die Messwerte für die Drücke und Temperaturen angepasst und damit die theoretischen Verschiebungen errechnet. In einem zweiten Berechnungslastfall werden die Drücke und Temperaturen angepasst und die gemessenen Verschiebungen (als Randbedingungen) aufgeprägt. Damit werden die Belastungen (Spannungen und/oder Dehnungen) errechnet. Das Steuerprogramm sorgt für einen Start der Berechnungen der beiden Lastfälle, wobei der zweite Lastfall in Abhängigkeit vom Ergebnis des Vergleichs der berechneten theoretischen Verschiebungen mit den gemessenen Verschiebungen gestartet wird. Anschließend sorgt das Steuerprogramm 11 für einen Export der Ergebnisse in die Schnittgrößen-Datei 50. Die exportierten Dateien enthalten die Schnittgrößen (Verschiebung, Verdrehung, Kraft, Moment) in Zuordnung zu einer von drei orthogonalen Raumkoordinaten sowie eine Kennzeichnung des zugehörigen Orts auf der Leitungsstruktur und einen Zeitstempel.

Der Aufruf des Rohrleitungsstatik-Programmmoduls erfolgt zyklisch, vorzugsweise in Abständen von 10 bis 15 Minuten. Die gemessenen Temperaturen und Drücke sowie Verschiebungen und die berechneten Schnittgrößen werden dann jeweils der Zyklusdauer zwischen den Aufrufen des Rohrleitungsstatik-Programmmoduls zugeordnet. Die gemessenen und berechneten Werte werden anschließend von dem Lebensdauerüberwachungsprogrämm klassiert zwischengespeichert. Das heißt, es werden für sämtliche Messwerte und sämtliche Schnittgrößen Klassen gebildet und eine mehrdimensionale Matrix gebildet, wobei jeder Messgröße und jeder Schnittgröße eine Koordinate zugeordnet wird. Die Dauer, in der eine bestimmte Kombination der Messwerte-Klassen und Schnittgrößen-Klassen auftrat, wird in einem Feld der Matrix akkumuliert.

Das Lebensdauerüberwachungsprogramm berechnet anschließend durch Aufruf des Berechnungsmoduls 30 aus den Messwerten und den Schnittgrößen und dem abgespeicherten Modell die Spannungen und/oder Dehnungen und daraus die Beanspruchungswerte, den Erschöpfungszuwachs bzw. die Restlebensdauer. Gleichzeitig kann mit Hilfe eines Visualisierungsprogrammmoduls dem Bediener auf einem Bildschirm eine Rohrleitungsstruktur angezeigt werden, auf der die Berechnungsergebnisse in geeigneter Weise angezeigt werden. Beispielsweise kann die Rohrleitungsanordnung so dargestellt werden, dass den einzelnen Rohrleitungsabschnitten Farben zugeordnet werden, die einer bestimmten Restlebensdauer entsprechen. Rohrleitungsabschnitte mit einer geringen Restlebensdauer können beispielsweise rot hervorgehoben werden.

## Patentansprüche

1. Verfahren zum Überwachen der Beanspruchung eines in eine Rohrleitungsanordnung eingebundenen, von einem Medium durchströmten Rohrleitungsabschnitts (1), wobei Daten, die zumindest Geometrie, Lagerung und Material des Rohrleitungsabschnitts (1) der Rohrleitungsanordnung beschreiben, einer Datenverarbeitungseinrichtung eingegeben und dort gespeichert werden und wobei:
a) laufend mit Hilfe von Sensoren einerseits wenigstens eine Temperatur und ein Druck des Mediums in dem Rohrleitungsabschnitt (1) erfasst werden und andererseits wenigstens eine Verschiebung oder Verdrehung eines Wandungsabschnitts des Rohrleitungsabschnitts gemessen wird und den Temperatur-, Druck- und Verschiebungs- und/oder Verdrehungswerten entsprechende Signale der Datenverarbeitungseinrichtung eingegeben und gespeichert werden,
b) von der Datenverarbeitungseinrichtung zyklisch
b1) unter Verwendung eines Rohrleitungsstatik-Programmmoduls (10) aus den die Geometrie, die Lagerung und das Material des Rohrleitungsabschnitts (1) beschreibenden Daten und aus den Temperatur-, Druck- und Verschiebungs- bzw. Verdrehungswerten Schnittgrößen an dem Ort des Wandungsabschnitts des Rohrleitungsabschnitts (1) berechnet werden, wobei
b1.1) aus den die Geometrie, die Lagerung und das Material des Rohrleitungsabschnitts beschreibenden Daten und aus den Temperatur- und Druckwerten unter Verwendung des Rohrleitungsstatik-Programmmoduls (10) wenigstens eine theoretische Verschiebung oder Verdrehung des Wandungsabschnitts berechnet wird,
b1.2) die wenigstens eine theoretische Verschiebung oder Verdrehung mit der entsprechenden gemessenen Verschiebung bzw. Verdrehung des Wandungsabschnitts verglichen wird,
b1.3) bei einer Überschreitung einer vorgegebenen Differenz zwischen der theoretischen und der gemessenen Verschiebung bzw. Verdrehung des Wandungsabschnitts erneut unter Verwendung des Rohrleitungsstatik-Programmmoduls (10) aus den die Geometrie, die Lagerung und das Material des Rohrleitungsabschnitts (1) beschreibenden Daten und aus den Temperatur- und Druckwerten sowie aus der gemessenen Verschiebung bzw. Verdrehung als Randbedingung die Schnittgrößen berechnet werden, und
b2) aus den die Geometrie, die Lagerung und das Material des Rohrleitungsabschnitts (1) beschreibenden Daten, den Temperatur- und Druckwerten und den Schnittgrößen Werte berechnet und gespeichert werden, die mechanische Spannungen und/oder Dehnungen in der Wandung des Wandungsabschnitts kennzeichnen, und
c) von der Datenverarbeitungseinrichtung zyklisch aus den die Spannungen und/oder Dehnungen kennzeichnenden Werten und der Zeitdauer, in der diese Spannungen bzw. Dehnungen vorlagen, Beanspruchungswerte, die die aktuelle Beanspruchung des Rohrleitungsabschnitts (1) anzeigen, bestimmt und gespeichert werden.

2. Verfahren nach Anspruch 1, **dadurch gekennzeichnet, dass** von der Datenverarbeitungseinrichtung aus der zeitlichen Folge einer Vielzahl zyklisch aufeinanderfolgend bestimmter Beanspruchungswerte ein Erschöpfungszuwachs und/oder eine Restlebensdauer der Rohrleitungsanordnung ermittelt und ausgegeben wird.

3. Verfahren nach Anspruch 1 oder 2, **dadurch gekennzeichnet, dass** die an dem Ort des Wandungsabschnitts berechneten Schnittgrößen für jede von drei orthogonalen Raumkoordinaten jeweils eine Verschiebung und eine Verdrehung des Wandungsabschnitts und eine Kraft und ein Moment an dem Ort des Wandungsabschnitts umfassen können.

4. Verfahren nach einem der Ansprüche 1 - 3, **dadurch gekennzeichnet, dass** im Schritt a) außerdem an Wandungsabschnitten angreifende Kräfte gemessen und entsprechende Signale der Datenverarbeitungseinrichtung eingegeben und gespeichert werden, im Schritt b) die Schnittgrößen und die die Spannungen und/oder Dehnungen kennzeichnenden Werte auch unter Verwendung der den Kräften entsprechenden Werte berechnet werden.

5. Verfahren nach einem der Ansprüche 1 - 4, **dadurch gekennzeichnet, dass** der Schritt b) zyklisch jeweils im Abstand von 1 Sekunde bis 10 Stunden, vorzugsweise im Abstand von 1 - 20 Minuten, ausgeführt wird.

6. Verfahren nach einem der Ansprüche 1 - 5, **dadurch gekennzeichnet, dass** die die Geometrie, die Lagerung und das Material des Rohrleitungsabschnitts (1) beschreibenden Daten als Konfigurationsdaten vor dem Schritt b) dem Rohrleitungsstatik-Programmmodul (10) zur Verfügung gestellt werden.

7. Verfahren nach einem der Ansprüche 1 - 6, **dadurch gekennzeichnet, dass** die Temperatur-, Druck- und Verschiebungs- und/oder Verdrehungswerte im Schritt b1) dem Rohrleitungsstätik-Programmmodul (10) als Import-Datei (40) eingegeben werden.

8. Verfahren nach einem der Ansprüche 1 - 7, **dadurch gekennzeichnet, dass** die Schnittgrößen im Schritt b1) von dem Rohrleitungsstatik-Programmmodul (10) als Export-Datei (50) ausgegeben werden.

9. Verfahren nach Anspruch 7, **dadurch gekennzeichnet, dass** die Daten der Import-Datei in Form von Zeitreihen langfristig abgespeichert werden.

10. Verfahren nach Anspruch 8, **dadurch gekennzeichnet, dass** die Daten der Export-Datei in Form von Zeitreihen langfristig abgespeichert werden.

11. Verfahren nach einem der Ansprüche 1 - 10, **dadurch gekennzeichnet, dass** die berechneten Schnittgrößen und die die mechanischen Spannungen und/oder Dehnungen kennzeichnenden Werte als Zeitreihen langfristig abgespeichert werden.

12. Verfahren nach einem der Ansprüche 1 - 11, **dadurch gekennzeichnet,**
**dass** die gemessenen Temperaturen, Drücke und Verschiebungen bzw. Verdrehungen und die berechneten Schnittgrößen sowie ggf. die gemessenen Kräfte jeweils in Klassen eingeteilt werden und aus den Klassen eine mehrdimensionale Matrix gebildet wird, wobei jede gemessene oder berechnete Größe einer Dimension entspricht, wobei jedes einzelne Matrixfeld einer bestimmten Temperatur, einem bestimmten Druck, einer bestimmten Verschiebung und bestimmten Schnittgrößen entspricht, und
**dass** die Zeitwerte der Zeiten, in denen die bestimmten Temperaturen, Drücke, Verschiebungen und Schnittgrößen vorlagen, in dem zugehörigen Matrixfeld akkumuliert werden.

## Claims

1. A method for monitoring the load on a pipe section (1) which is integrated in a pipe arrangement and through which a medium flows, wherein data describing at least the geometry, mounting and material of the pipe section (1) of the pipe arrangement is input into a data processing device and is stored therein, and wherein:
a) on the one hand, at least one temperature and one pressure of the medium are continuously detected in the pipe section (1) by means of sensors, and on the other hand, at least one displacement or twisting of a wall section of the pipe section is measured and signals corresponding to the values of the temperature, pressure and displacement and/or twisting are input and stored in the data processing device,
b) the data processing device cyclically calculates,
b1) by means of a pipe static program module (10), stress resultants at the location of the wall section of the pipe section (1) from the data describing the geometry, the mounting and the material of the pipe section (1) and from the values of the temperature, pressure and displacement and/or twisting, wherein
b1.1) from the data describing the geometry, the mounting and the material of the pipe section and from the values of the temperature and pressure, at least one theoretical displacement or twisting of the wall section is calculated by means of the pipe static program module (10),
b1.2) the at least one theoretical displacement or twisting is compared with the corresponding measured displacement and/or twisting of the wall section,
b1.3) in the case that a predetermined difference between the theoretical and the measured displacements and/or twistings of the wall section is exceeded, the stress resultants are calculated again as boundary condition, by means of the pipe static program module (10), from the data describing the geometry, the mounting and the material of the pipe section (1) and from the temperature and pressure values and also from the measured displacement and/or twisting, and
b2) values are calculated from the data describing the geometry, the mounting and the material of the pipe section (1), from the temperature and pressure values and from the stress resultants and are stored, which values characterize the mechanical stresses and/or strains in the wall of the wall section, and
c) load values indicating the current load on the pipe section (1) are cyclically determined by the data processing device from the values characterizing the stresses and/or strains and from the time period during which these stresses and/or strains occurred, and are stored.

2. The method according to claim 1, **characterized in that** a fatigue accumulation rate and/or remaining service life of the pipe arrangement are/is determined by the data processing device from the chronological sequence of a plurality of cyclically determined successive load values and are/is output.

3. The method according to claim 1 or 2, **characterized in that** the stress resultants calculated at the location of the wall section can comprise, for each of three orthogonal space coordinates, in each case a displacement and a twisting of the wall section and a force and a moment at the location of the wall section.

4. The method according to any one of claims 1 to 3, **characterized in that** in step a) forces acting on wall sections are also measured, and corresponding signals of the data processing device are input and stored, and in step b), the stress resultants and values characterizing the stresses and/or strains are also calculated using the values that correspond to the forces.

5. The method according to any one of claims 1 to 4, **characterized in that** the step b) is carried out cyclically in each case at intervals of 1 second to 10 10 hours, preferably at intervals of 1 to 20 minutes.

6. The method according to any of claims 1 to 5, **characterized in that** prior to step b), the data describing the geometry, the mounting and the material of the pipe section (1) are made available to the pipe static program module (10) as configuration data.

7. The method according to any one claims 1 to 6, **characterized in that** in step b), the temperature, pressure and displacement and/or twisting values are input in the pipe static program module (10) as an import file (40).

8. The method according to any one of claims 1 to 7, **characterized in that** in step b1), the stress resultants are output by the pipe static program module (10) as an export file (50).

9. The method according to claim 7, **characterized in that** the data of the import file is stored long-term in the form of time series.

10. The method according to claim 8, **characterized in that** the data of the export file is stored long-term in the form of time series.

11. The method according to any one of claims 1 to 10, **characterized in that** the calculated stress resultants and the values characterizing mechanical stresses and/or strains are stored long-term as time series.

12. The method according to any one of claims 1 to 11, **characterized in**
**that** the measured temperatures, pressures and displacements and/or twistings and the calculated stress resultants are each divided into classes and a multi-dimensional matrix is formed from said classes, wherein each of the measured or calculated variables corresponds to a dimension, wherein each individual matrix field corresponds to a particular temperature, a particular pressure, a particular displacement and a particular stress resultant, and
**that** the time values of the times in which the particular temperatures, pressures, displacements and stress resultants occurred are accumulated in the associated matrix field.

## Revendications

1. Procédé pour la surveillance de la contrainte d'une section de conduite (1), traversée par un fluide, intégrée dans un agencement de conduites, dans lequel des données décrivant au moins la géométrie, la pose et le matériau de la section de conduite (1) de l'agencement de conduites sont entrées dans un dispositif de traitement de données et y sont mémorisées, et dans lequel :
a) en continu, à l'aide de capteurs, au moins une température et une pression du fluide dans la section de conduite (1) sont d'une part détectées, et au moins un déplacement ou une torsion d'une partie de paroi de la section de conduite étant d'autre part mesuré(e), et des signaux correspondant aux valeurs de température, de pression et de déplacement et/ou à des valeurs de torsion étant entrés dans le dispositif de traitement de données et étant mémorisés,
b) le dispositif de traitement de données calculant cycliquement,
b1) en utilisant un module de programme de statique des conduites (10), à partir des données décrivant la géométrie, la pose et le matériau de la section de conduite (1) et à partir des valeurs de température, de pression et de déplacement ou de torsion, des grandeurs moyennes à l'emplacement de la partie de paroi de la section de conduite (1), dans lequel
b1.1) on calcule, à partir des données décrivant la géométrie, la pose et le matériau de la section de conduite et à partir des valeurs de température et de pression, en utilisant le module de programme de statique des conduites (10), au moins un déplacement théorique ou une torsion théorique de la partie de paroi,
b1.2) cet au moins un déplacement théorique ou cette au moins une torsion théorique étant comparé(e) au déplacement correspondant mesuré ou à la torsion correspondante mesurée de la partie de paroi,
b1.3) en cas de dépassement par le haut d'une différence prescrite entre le déplacement théorique et mesuré ou la torsion théorique et mesurée de la partie de paroi, en utilisant de nouveau le module de programme de statique des conduites (10), étant calculés, à partir des données décrivant la géométrie, la pose et le matériau de la section de conduite (1) et des valeurs de température et de pression ainsi qu'à partir du déplacement mesuré ou de la torsion mesurée, les grandeurs moyennes en tant que conditions aux limites, et
b2) à partir des données décrivant la géométrie, la pose et le matériau de la section de conduite (1), des valeurs de température et de pression et des grandeurs moyennes, des valeurs étant calculées et mémorisées, lesquelles caractérisent des contraintes mécaniques et/ou dilatations dans la paroi de la partie de paroi, et
c) le dispositif de traitement de données déterminant de manière cyclique, à partir des valeurs caractérisant les tensions et/ou dilatations et de la durée pendant laquelle ces tensions ou dilatations ont eu lieu, des valeurs de contrainte qui indiquent la contrainte actuelle de la section de conduite (1), et les mémorisant.

2. Procédé selon la revendication 1, **caractérisé en ce que** le dispositif de traitement de données détermine, à partir de la suite chronologique d'une pluralité de valeurs de contrainte définies se suivant cycliquement, une augmentation de l'épuisement et/ou une durée de vie résiduelle de l'agencement de conduite, et la fait sortir.

3. Procédé selon la revendication 1 ou 2, **caractérisé en ce que** les grandeurs moyennes calculées à l'emplacement de la partie de paroi peuvent comprendre, pour chacune de trois coordonnées spatiales orthogonales, respectivement un déplacement et une torsion de la partie de paroi et une force et un moment à l'emplacement de la partie de paroi.

4. Procédé selon l'une des revendications 1 à 3, **caractérisé en ce qu'**à l'étape a), on mesure en outre des forces s'exerçant sur des parties de paroi, et des signaux correspondants étant entrés dans le dispositif de traitement de données et étant mémorisés, **en ce qu'**à l'étape b), on calcule les grandeurs moyennes et les valeurs caractérisant les tensions et/ou dilatations également en utilisant les valeurs correspondant aux forces.

5. Procédé selon l'une des revendications 1 à 4, **caractérisé en ce que** l'étape b) est respectivement exécutée cycliquement à intervalles de 1 seconde à 10 heures, de préférence à intervalles de 1 à 20 minutes.

6. Procédé selon l'une des revendications 1 à 5, **caractérisé en ce que** les données décrivant la géométrie, la pose et le matériau de la section de conduite (1) sont mises à disposition, en tant que données de configuration, avant l'étape b), à l'attention du module de programme de statique des conduites (10).

7. Procédé selon l'une des revendications 1 à 6, **caractérisé en ce qu'**à l'étape b1), les valeurs de température, de pression et de déplacement et/ou de torsion sont entrées dans le module de programme de statique des conduites (10) en tant que fichier d'importation (40).

8. Procédé selon l'une des revendications 1 à 7, **caractérisé en ce qu'**à l'étape b1), les grandeurs moyennes sont sorties par le module de programme de statique des conduites (10) en tant que fichier d'exportation (50).

9. Procédé selon la revendication 7, **caractérisé en ce que** les données du fichier d'importation sont mémorisées à long terme sous la forme de séries chronologiques.

10. Procédé selon la revendication 8, **caractérisé en ce que** les données du fichier d'exportation sont mémorisées à long terme sous la forme de séries chronologiques.

11. Procédé selon l'une des revendications 1 à 10, **caractérisé en ce que** les grandeurs moyennes calculées et les valeurs caractérisant les contraintes mécaniques et/ou dilatations sont mémorisées à long terme en tant que séries chronologiques.

12. Procédé selon l'une des revendications 1 à 11, **caractérisé**
**en ce que** les températures, pressions et déplacements ou torsion mesuré(e)s et les grandeurs moyennes calculées ainsi que le cas échéant les forces mesurées, sont respectivement réparti(e)s en classes, et en ce que l'on forme une matrice multidimensionnelle à partir des classes, dans lequel chaque grandeur mesurée ou calculée correspond à une dimension, dans lequel chaque champ individuel de matrice correspond à une température définie, à une pression définie, à un déplacement défini et à des grandeurs moyennes définies, et
**en ce que** les valeurs temporelles des temps au cours desquels les températures définies, les pressions définies, les décalages définis et les grandeurs moyennes définies ont eu lieu, sont accumulées dans le champ de matrice associé.
